(19)

**Europäisches Patentamt**

**European Patent Office**

**Office européen des brevets**

(11)     **EP 2 555 368 A1**

(12)     **EUROPÄISCHE PATENTANMELDUNG**

(43) Veröffentlichungstag:
     **06.02.2013 Patentblatt 2013/06**

(51) Int Cl.:
     **H02H 7/122** *(2006.01)*      **H02M 7/48** *(2007.01)*

(21) Anmeldenummer: **11176567.3**

(22) Anmeldetag: **04.08.2011**

(84) Benannte Vertragsstaaten:
     **AL AT BE BG CH CY CZ DE DK EE ES FI FR GB
GR HR HU IE IS IT LI LT LU LV MC MK MT NL NO
PL PT RO RS SE SI SK SM TR**
     Benannte Erstreckungsstaaten:
     **BA ME**

(71) Anmelder: **Siemens Aktiengesellschaft
80333 München (DE)**

(72) Erfinder: **Schwesig, Günter
91054 Erlangen (DE)**

(54)     **Verfahren und Vorrichtung zur sicheren Überwachung eines Drehstrommotors**

(57)     Die Erfindung betrifft ein Verfahren zur sicheren Überwachung eines durch einen einem Zwischenkreis nachgeschalteten Wechselrichter (14) gespeisten Drehstrommotors (12) und eine nach dem Verfahren arbeitende Vorrichtung, bei dem bzw. der aus allen Phasenströmen und Phasenspannungen eine Wechselrichterausgangsleistung Pw und aus einem Zwischenkreisstrom und einer Zwischenkreisspannung eine Zwischenkreisleistung Pzk ermittelt wird, wobei die beiden ermittelten Leistungen verglichen werden und in Abhängigkeit vom Ergebnis des Vergleichs ein Ausgangssignals (30) generiert wird.

EP 2 555 368 A1

**Beschreibung**

Die Erfindung betrifft ein Verfahren und eine Vorrichtung zur sicheren Überwachung Drehstrommotors, insbesondere eines feldorientiert betriebenen Drehstrommotors. Der Drehstrommotor wird dabei in an sich bekannter Art und Weise von einem Wechselrichter gespeist und dieser Wechselrichter ist einem Zwischenkreis nachgeschaltet.

Verfahren und Vorrichtungen zur Überwachung von Drehstrommotoren und feldorientiert betriebenem Drehstrommotoren sind an sich bekannt. Exemplarisch wird auf die DE 10 2006 042 038 B verwiesen.

In der DE 10 2006 042 038 B wird unter anderem die Erfassung und Überwachung der Phasenströme iR, iS und iT beschrieben. Die Summe dieser Phasenströme muss sich bei ordnungsgemäßem Betrieb des Drehstrommotors aufheben, weil kein Mittelpunktanschluss vorgesehen ist und davon ausgegangen wird, dass kein Erdschluss vorliegt. Allerdings kann es nach der Ermittlung der Phasenströme bei der Aufbereitung der entsprechenden Sensorsignale in einem ASIC, Mikrocontroller oder dergleichen zu einem sogenannten Gleichzeitigkeitsnormierfehler kommen. Die DE 10 2006 042 038 B beschreibt unterschiedliche Möglichkeiten zur Erkennung und Behandlung eines solchen Fehlers.

Eine Aufgabe der vorliegenden Erfindung besteht darin, ein weiteres Verfahren und eine nach dem Verfahren arbeitende Vorrichtung zur sicheren Überwachung eines insbesondere feldorientiert betriebenen Drehstrommotors anzugeben, insbesondere ein Verfahren bzw. eine Vorrichtung, das bzw. die die Problematik des Gleichzeitigkeitsnormierfehlers vermeidet.

Diese Aufgabe wird erfindungsgemäß mit einem Verfahren mit den Merkmalen des Anspruchs 1 gelöst. Dazu sind bei einem Verfahren zur sicheren Überwachung durch einen einem Zwischenkreis nachgeschalteten Wechselrichter gespeisten Drehstrommotors folgende Verfahrensschritte vorgesehen:

a) Es werden sämtliche Phasenströme iR, iS, iT und Phasenspannungen uR, uS, uT des Drehstrommotors ermittelt.
b) Aus den Phasenströmen und -spannungen wird eine Wechselrichterausgangsleistung Pw ermittelt.
c) Weiterhin werden ein Zwischenkreisstrom Izk und eine Zwischenkreisspannung Uzk und daraus eine Zwischenkreisleistung Pzk ermittelt.
d) Die ermittelten Leistungen, also Wechselrichterausgangsleistung Pw und Zwischenkreisleistung Pzk werden miteinander verglichen.
e) Wenn die ermittelte Wechselrichterausgangsleistung Pw und die ermittelte Zwischenkreisleistung Pzk innerhalb vorgegebener oder vorgebbarer Grenzen nicht übereinstimmen, wird ein diesbezügliches Ausgangssignal generiert.

Die Generierung eines Ausgangssignals meint dabei jede Form von Ausgangssignal, also sowohl ein externes Ausgangssignals im Sinne einer Aktivierung eines Ausgangs wie auch in internes Ausgangssignal im Sinne des Setzens oder Löschens einer Speicherstelle. Bei einer nicht gegebenen oder nicht ausreichenden Übereinstimmung der beiden ermittelten Leistungen kann also entweder ein Signal generiert werden im Sinne eines logischen High-Pegels oder ein Signal generiert werden, indem ein ansonsten gegebener logischer High-Pegel invertiert wird.

Die oben genannte Aufgabe wird auch mit einer korrespondierenden Vorrichtung zur Durchführung des Verfahrens wie hier und nachfolgend beschrieben mit den Merkmalen des Anspruchs 3 gelöst. Dazu weist eine Vorrichtung zur Durchführung des Verfahrens eine Antriebsregelungseinrichtung und Mittel zur Erfassung der Phasenströme iR, iS, iT und der Phasenspannungen uR, uS, uT des Drehstrommotors sowie zur Erfassung des Zwischenkreisstroms Izk und der Zwischenkreisspannung Uzk auf. Dabei kommt in Betracht, alle drei Phasenströme iR, iS, iT zu messen. Es genügt allerdings auch, nur zwei der Phasenströme zu messen oder in sonst geeigneter Art und Weise zu erfassen, da sich der dritte Strom aus der negativen Summe der beiden anderen Phasenströme ergibt. Die Antriebsregelungseinrichtung ist so ausgeführt, dass mit dieser aus den erfassten Strömen und Spannungen eine Wechselrichterausgangsleistung Pw und eine Zwischenkreisleistung Pzk ermittelbar ist, z.B. indem die Antriebsregelungseinrichtung eine Verarbeitungseinheit in Form von oder nach Art eines Mikroprozessors und einen Speicher mit einem Computerprogramm aufweist, wobei die Verarbeitungseinheit im Betrieb der Antriebsregelungseinrichtung das Computerprogramm ausführt und das Computerprogramm Programmcodeanweisungen zur Ermittlung der Leistungswerte Pw, Pzk aus den als Messwerte zugeführten Strom- und Spannungswerten umfasst. Die Antriebsregelungseinrichtung umfasst sodann Mittel zum Vergleich der Wechselrichterausgangsleistung Pw und der Zwischenkreisleistung Pzk sowie Mittel zum Generieren eines Ausgangssignals, wenn die ermittelte Wechselrichterausgangsleistung Pw und die ermittelte Zwischenkreisleistung Pzk innerhalb vorgegebener oder vorgebbarer Grenzen nicht übereinstimmen. Bei diesen Mitteln kann es sich ebenfalls um entsprechende Programmcodeanweisungen eines Computerprogramms handeln oder auch um einen in Hardware ausgeführten Komparator, dem die beiden ermittelten Leistungswerte Pw, Pzk als Eingangssignale zugeführt werden und dessen Ausgang das jeweils generierte Ausgangssignal darstellt oder eine Grundlage dafür bildet.

Wenn die Antriebsregelungseinrichtung mehrkanalig und sicherheitsgerichtet ausgeführt ist, erfüllen die Ergebnisse der Überwachung die einschlägigen, insbesondere berufsgenossenschaftlichen Vorschriften.

Wenn die Antriebsregelungseinrichtung eine erste Funktionseinheit zur Ermittlung der Wechselrichterausgangsleistung Pw aus den erfassten Phasenströmen iR, iS, iT und Phasenspannungen uR, uS, uT und eine unabhängige zweite Funktionseinheit zur Ermittlung der Zwischenkreisleistung Pzk aus dem Zwischenkreisstrom Izk und der Zwischenkreisspannung Uzk umfasst, ergibt sich eine mehrkanalige, redundante Ermittlung der jeweiligen Leistungswerte. Selbst wenn eine der Funktionseinheiten, bei denen es sich zum Beispiel eine Funktionseinheit mit einem eigenen Mikroprozessor, einem eigenen Speicher oder Zugriff auf einen auch durch andere Funktionseinheiten nutzbaren Speicher und einem in den Speicher geladenen Computerprogramm zur Ermittlung des jeweiligen Leistungswerts handelt, ausfällt, liefert üblicherweise noch die komplementäre Funktionseinheit einen Leistungswert, der für eine weitere, nicht mehr sicherheitsgerichtete Verarbeitung verwendet werden kann.

Wenn die Antriebsregelungseinrichtung Funktionseinheiten derart aufweist, dass durch die erste Funktionseinheit die Wechselrichterausgangsleistung Pw sowie die Zwischenkreisleistung Pzk und durch die zweite Funktionseinheit die Zwischenkreisleistung Pzk sowie die Wechselrichterausgangsleistung Pw ermittelbar ist, ergibt sich eine Möglichkeit zum Vergleich der ermittelten Leistungswerte innerhalb jeder Funktionseinheit wie auch kreuzweise. Wenn zum Beispiel bei einem kreuzweisen Vergleich zweier Leistungswerte, also jeweils Wechselrichterausgangsleistung Pw und Zwischenkreisleistung Pzk, eine Übereinstimmung oder ausreichende Übereinstimmung festgestellt wurde, ist eine mehrkanalig redundante Überprüfung der Leistungswerte erfolgt und auf Basis einer solchen Überprüfung kann das Ausgangssignal als redundantes Ausgangssignal, also z.B. in Form von jeweils einem Ausgangssignalen für jeden der beiden kreuzweisen Vergleiche, generiert werden.

Der Vorteil der Erfindung besteht darin, dass der ordnungsgemäße Betrieb des Drehstrommotors durch Überwachung der beiden Leistungswerte, also Zwischenkreisleistung Pzk und Wechselrichterausgangsleistung Pw, leicht überprüfbar ist. Zudem wird bei der Betrachtung der beiden Leistungswerte die Problematik eventueller Gleichzeitigkeitsnormierfehler umgangen.

Schließlich ist die Ermittlung der beiden Leistungswerte eine Möglichkeit für eine Basis zur redundanten Ermittlung eines jeweiligen Drehmoments des Drehstrommotors. Eine Leistung P und ein Drehmoment m eines Drehstrommotors sind bekanntlich über die Beziehung $P = m \times \omega/Zp = m \times 2n \times f/Zp$, wobei $\omega$ und $f$ mittelbar bzw. unmittelbar für die Ständerfrequenz des Motors und Zp für die Polpaarzahl stehen, verknüpft. Aus jedem ermittelten Leistungswert kann also bei bekannter Ständerfrequenz oder bekanntem $\omega$ das jeweilige Drehmoment ermittelt werden. Indem eine solche Berechnung nur durchgeführt wird, wenn zuvor sicher gestellt wurde, dass die ermittelte Wechselrichterausgangsleistung Pw und die ermittelte Zwischenkreisleistung Pzk innerhalb vorgegebener oder vorgebbarer Grenzen übereinstimmen, ist eine redundante Basis für die Ermittlung des Drehmoments gegeben, indem sowohl von der Wechselrichterausgangsleistung Pw wie auch von der Zwischenkreisleistung Pzk ausgegangen werden kann. Ein auf diese Weise ermitteltes Drehmoment kann für weitere Überwachungen verwendet werden, zum Beispiel solche Überwachungen, wie sie in der DE 10 2006 042 038 B bereits beschrieben sind, also zum Beispiel zur sicheren Überwachung des Drehmoments und/oder zur sicheren Begrenzung des Drehmoments.

Insoweit ist bei einer Ausführungsform des Verfahrens vorgesehen, dass einer Übereinstimmung oder einer zumindest ausreichenden Übereinstimmung der ermittelten Wechselrichterausgangsleistung Pw und der ermittelten Zwischenkreisleistung Pzk die ermittelte Wechselrichterausgangsleistung Pw oder die ermittelte Zwischenkreisleistung Pzk zur Ermittlung eines momentanen Drehmoments des Drehstrommotors verwendet wird.

Soweit einzelne Aspekte des Verfahrens in Software ausgeführt sind, etwa die Ermittlung der beiden Leistungswerte und/oder deren Vergleich und/oder die Erzeugung des Ausgangssignals in Abhängigkeit vom Ergebnis des Vergleichs ist die Erfindung auch ein Computerprogramm mit durch einen Computer ausführbaren Programmcodeanweisungen und andererseits ein Speichermedium mit einem derartigen Computerprogramm sowie schließlich auch eine Antriebsregelungseinrichtung für einen Drehzahlmotor mit einer Verarbeitungseinheit und einem Speicher, in deren Speicher als Mittel zur Durchführung des Verfahrens und seiner Ausgestaltungen ein solches Computerprogramm geladen oder ladbar ist.

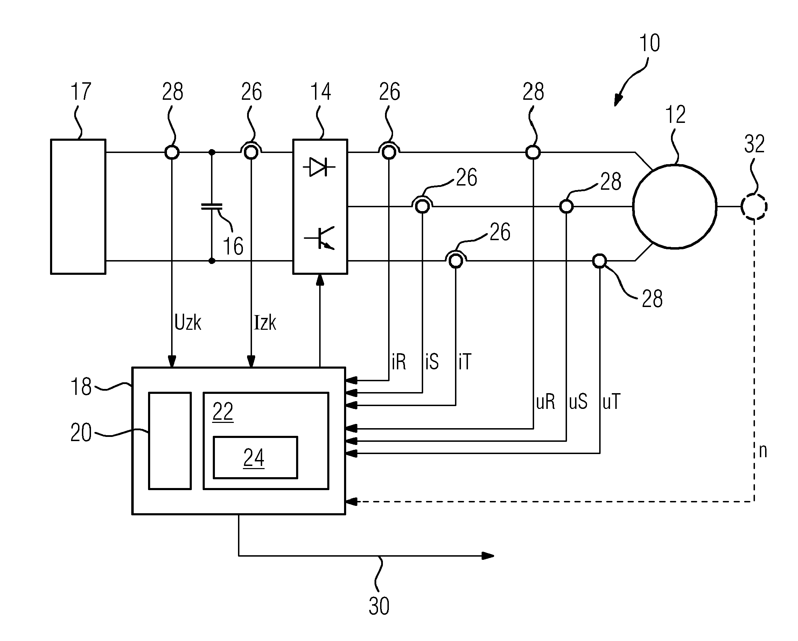

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Die einzige FIG zeigt einen Antrieb mit einem Drehstrommotor.

Die FIG zeigt einen insgesamt mit 10 bezeichneten Antrieb mit einem im Folgenden mitunter auch nur kurz als Motor bezeichneten Drehstrommotor 12. Der Drehstrommotor 12 wird durch einen Wechselrichter 14 gespeist, der seinerseits einem Zwischenkreis mit einem Zwischenkreiskondensator 16 nachgeschaltet ist. Der Antrieb wird aus einer Spannungsquelle 17 gespeist, z.B. einer Batterie oder dergleichen oder einem Versorgungsnetz. Zur Steuerung und Antriebsregelung ist eine Antriebsregelungseinrichtung 18 vorgesehen, die insbesondere den Wechselrichter 14 ansteuert, um eine gewünschte Drehzahl des Motors 12 zu erreichen. Dafür umfasst die Antriebsregelungseinrichtung 18 in an sich bekannter Art und Weise eine Verarbeitungseinheit 20 in Form von oder nach Art eines Mikroprozessors und einen Speicher 22, in den mindestens ein Computerprogramm 24 geladen ist.

Eine Überwachung des Motors 12 erfolgt auf Basis einer Ermittlung der Phasenströme iR, iS, iT und Phasenspannungen uR, uS, uT sowie des Zwischenkreisstroms Izk und der Zwischenkreisspannung Uzk. Dafür sind entsprechende Sensoren 26, 28 vorgesehen. Jeder Sensor 26, 28 liefert einen Messwert für zum Beispiel einen Phasestrom oder eine Phasenspannung an die Antriebsregelungseinrichtung 18. Die Antriebsregelungseinrichtung 18 ermittelt aus den jeweiligen Messwerten eine Wechselrichterausgangsleistung Pw und eine Zwischenkreisleistung Pzk auf Basis der nachfolgenden Beziehungen:

$$Pw = iR \times uR + iS \times uS + iT \times uT$$

$$Pzk = Izk \times Uzk.$$

Dafür ist in den Speicher 22 entweder ein entsprechendes Computerprogramm 24 geladen oder ein bereits vorhandenes Computerprogramm 24 ist um Computerprogrammanweisungen zur Ermittlung der beiden oben genannten Leistungswerte, nämlich der Wechselrichterausgangsleistung Pw und der Zwischenkreisleistung Pzk, ergänzt. Alternativ kann die Antriebsregelungseinrichtung 18 zur Ermittlung der beiden Leistungswerte auch in Hardware ausgeführte Multiplikatoren und Addierer umfassen.

Die beiden Leistungswerte werden durch die Antriebsregelungseinrichtung 18 verglichen. Dafür umfasst das oder ein Computerprogramm 24 entsprechende Programmcodeanweisungen oder die Antriebsregelungseinrichtung 18 einen Komparator.

Bei einem normalen und fehlerfreien Betrieb des Motors 12 besteht die Erwartung, dass die beiden Leistungswerte identisch sind. Wenn also zu irgendeinem Zeitpunkt eine Abweichung der beiden Leistungswerte erkannt wird, liegt eine Ausnahmesituation vor.

Zur Behandlung einer solchen Ausnahmesituation ist vorgesehen, dass die Antriebssteuerungseinrichtung 18 ein Ausgangssignal 30 erzeugt, wenn die ermittelte Wechselrichterausgangsleistung Pw und die ermittelte Zwischenkreisleistung Pzk innerhalb vorgegebener oder vorgebbarer Grenzen nicht übereinstimmen. Die Berücksichtigung einer Übereinstimmung oder einer nicht gegebenen Übereinstimmung innerhalb vorgegebener oder vorgebbarer Grenzen trägt der Tatsache Rechnung, dass zum Beispiel bei einer Verarbeitung der jeweiligen Messwerte durch ein Computerprogramm 24 und eine vorangehende Analog/Digital-Wandlung Rundungsfehler oder dergleichen auftreten können.

Das Ausgangssignal kann implementationsabhängig entweder eine gegebene ausreichende Übereinstimmung der beiden Leistungswerte oder eine nicht gegebene Übereinstimmung der beiden Leistungswerte anzeigen.

Bei einer Übereinstimmung der ermittelten Wechselrichterausgangsleistung Pw und der ermittelten Zwischenkreisleistung Pzk innerhalb der vorgegebenen oder vorgebbaren Grenzen kann die ermittelte Wechselrichterausgangsleistung Pw oder die ermittelte Zwischenkreisleistung Pzk zur Ermittlung eines momentanen Drehmoments des Motors 12 verwendet werden. Dazu wird mit einem Encoder 32 ein Maß für eine Drehzahl n des Motors 12 aufgenommen. Diese Drehzahl n entspricht bei Vernachlässigung von Effekten wie Schlupf und dergleichen im Wesentlichen der Ständerfrequenz.

Auf dieser Basis kann anhand der bekannten Beziehung

$$P = m \times \omega/Zp = m \times 2\pi \times f/Zp \approx m \times 2\pi \times n$$

mit einem der ermittelten Leistungswerte Pw, Pzk und der ermittelten Drehzahl n das Drehmoment m ermittelt werden. Der Wert des so ermittelten Drehmoments m kann im Weiteren bestimmungsgemäß überwacht werden, zum Beispiel auf das Einhalten von vorgegebenen oder vorgebbaren Grenzwerten.

Einzelne zentrale Aspekte der hier vorgelegten Beschreibung lassen sich damit kurz wie folgt zusammenfassen: Es wird ein Verfahren zur sicheren Überwachung eines durch einen einem Zwischenkreis nachgeschalteten Wechselrichter 14 gespeisten Drehstrommotors 12 und eine nach dem Verfahren arbeitende Vorrichtung angegeben, bei dem bzw. der aus allen Phasenströmen und Phasenspannungen eine Wechselrichterausgangsleistung Pw und aus einem Zwischenkreisstrom und einer Zwischenkreisspannung eine Zwischenkreisleistung Pzk ermittelt wird, wobei die beiden ermittelten Leistungen verglichen werden und in Abhängigkeit vom Ergebnis des Vergleichs ein Ausgangssignal 30 generiert wird. Wenn bei einem Vergleich der beiden Leistungswerte eine Abweichung festgestellt wird, ist eine Ausnahmesituation erkannt, die durch das Ausgangssignal 30 angezeigt wird. Solange die beiden ermittelten Leistungswerte innerhalb der vorgegebenen oder vorgebbaren Grenzen übereinstimmen, handelt es sich um eine redundante Ermittlung zumindest eines Leistungswertes mit dem in einer nachfolgenden Operation zum Beispiel ein Drehmoment des Motors 12 ermittelt werden kann. Indem die beiden Leistungswerte fortwährend oder zyklisch verglichen werden, handelt es sich bei dem zum Beispiel für die Ermittlung des jeweiligen Drehmoments verwendeten Leistungswert auch um einen fehlersicher ermittelten Leistungswert, denn bei einer Übereinstimmung der beiden Leistungswerte kann von einer korrekten Ermittlung jedes Leistungswerts ausgegangen werden. Insgesamt eignet sich der hier vorgeschlagene Ansatz damit auch als Basis für eine fehlersichere Drehmomentüberwachung.

**Patentansprüche**

1. Verfahren zur sicheren Überwachung eines durch einen einem Zwischenkreis nachgeschalteten Wechselrichter (14) gespeisten Drehstrommotors (12) mit folgenden Verfahrensschritten:

   a) Ermitteln eines jeden Phasenstroms (iR,iS,iT) des Drehstrommotors (12),
   b) Ermitteln einer jeden Phasenspannung (uR,uS,uT) des Drehstrommotors (12),
   c) Ermitteln einer Wechselrichterausgangsleistung (Pw) aus den Phasenströmen (iR,iS,iT) und den Phasenspannungen (uR, uS,uT),
   d) Ermitteln eines Zwischenkreisstroms (Izk),
   e) Ermitteln einer Zwischenkreisspannung (Uzk),
   f) Ermitteln einer Zwischenkreisleistung (Pzk) aus dem Zwischenkreisstrom (Izk) und der Zwischenkreisspannung (Uzk),
   g) Vergleichen der ermittelten Wechselrichterausgangsleistung (Pw) und der ermittelten Zwischenkreisleistung (Pzk) und
   h) Generieren eines Ausgangssignals (30), wenn die ermittelte Wechselrichterausgangsleistung (Pw) und die ermittelte Zwischenkreisleistung (Pzk) innerhalb vorgegebener oder vorgebbarer Grenzen nicht übereinstimmen.

2. Verfahren nach Anspruch 1, wobei bei einer Übereinstimmung der ermittelten Wechselrichterausgangsleistung (Pw) und der ermittelten Zwischenkreisleistung (Pzk) innerhalb der vorgegebenen oder vorgebbaren Grenzen die ermittelte Wechselrichterausgangsleistung (Pw) oder die ermittelte Zwischenkreisleistung (Pzk) zur Ermittlung eines momentanen Drehmoments des Drehstrommotors (12) verwendet wird.

3. Vorrichtung zur Durchführung des Verfahrens nach Anspruch 1 oder 2, mit einer Antriebsregelungseinrichtung (18) und Mitteln zur Erfassung mindestens zweier der drei Phasenströme (iR,iS,iT) und Mitteln zur Erfassung der drei Phasenspannungen (uR,uS,uT) des Drehstrommotors (12) sowie zur Erfassung des Zwischenkreisstroms (Izk) und der Zwischenkreisspannung (Uzk),
   wobei mittels der Antriebsregelungseinrichtung (18) aus den erfassten Strömen und Spannungen eine Wechselrichterausgangsleistung (Pw) und eine Zwischenkreisleistung (Pzk) ermittelbar ist und
   wobei die Antriebsregelungseinrichtung (18) Mittel zum Vergleich der Wechselrichterausgangsleistung (Pw) und der Zwischenkreisleistung (Pzk) sowie Mittel zum Generieren eines Ausgangssignals (30), wenn die ermittelte Wechselrichterausgangsleistung (Pw) und die ermittelte Zwischenkreisleistung (Pzk) innerhalb vorgegebener oder vorgebbarer Grenzen nicht übereinstimmen, umfasst.

4. Vorrichtung nach Anspruch 3, wobei die Antriebsregelungseinrichtung (18) mehrkanalig und sicherheitsgerichtet ausgeführt ist.

5. Vorrichtung nach Anspruch 4, wobei die Antriebsregelungseinrichtung (18) eine erste Funktionseinheit zur Ermittlung der Wechselrichterausgangsleistung (Pw) aus den erfassten Phasenströmen (iR,iS,iT) und Phasenspannungen (uR, uS, uT) und eine unabhängige zweite Funktionseinheit zur Ermittlung der Zwischenkreisleistung (Pzk) aus dem Zwischenkreisstrom (Izk) und der Zwischenkreisspannung (Uzk) umfasst.

6. Vorrichtung nach Anspruch 5, wobei durch die erste Funktionseinheit die Wechselrichterausgangsleistung (Pw) und die Zwischenkreisleistung (Pzk) und wobei durch die zweite Funktionseinheit die Zwischenkreisleistung (Pzk) und die Wechselrichterausgangsleistung (Pw) ermittelbar ist.

7. Vorrichtung nach einem der Ansprüche 3 bis 6, wobei das Ausgangssignal (30) als redundantes Ausgangssignal generierbar ist.

10 12 32 n

28 28 28 uT

uS

uR

26 26 iT

iS

iR

14

26 Izk

16

28 Uzk

17

22 24

18 20

30

Europäisches
Patentamt

European
Patent Office

Office européen
des brevets

**EUROPÄISCHER RECHERCHENBERICHT**

**Nummer der Anmeldung**

EP 11 17 6567

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP 58 043176 A (TOKYO SHIBAURA ELECTRIC CO) 12. März 1983 (1983-03-12) * Zusammenfassung; Abbildungen 1-5 * | 1-7 | INV. H02H7/122 H02M7/48 |
| Y | JP 2003 189631 A (FUJI ELECTRIC CO LTD) 4. Juli 2003 (2003-07-04) * Zusammenfassung; Abbildung 1 * | 1-7 | |
| Y | US 2009/056385 A1 (MAEKAWA SARI [JP]) 5. März 2009 (2009-03-05) * Absätze [0049], [0050], [0053], [0058]; Abbildungen 1,7 * | 2 | |

**RECHERCHIERTE SACHGEBIETE (IPC)**

H02H
H02M

Der vorliegende Recherchenbericht wurde für alle Patentansprüche erstellt

| Recherchenort | Abschlußdatum der Recherche | Prüfer |
|---|---|---|
| Den Haag | 16. Februar 2012 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 17 6567

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2012

| Im Recherchenbericht angeführtes Patentdokument | Datum der Veröffentlichung | Mitglied(er) der Patentfamilie | Datum der Veröffentlichung |
|---|---|---|---|
| JP 58043176 A | 12-03-1983 | KEINE | |
| JP 2003189631 A | 04-07-2003 | KEINE | |
| US 2009056385 A1 | 05-03-2009 | CN 101383583 A<br>JP 2009065764 A<br>US 2009056385 A1 | 11-03-2009<br>26-03-2009<br>05-03-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006042038 B